# EUROPÄISCHE PATENTANMELDUNG

(11) **EP 3 318 164 A1**
(43) Veröffentlichungstag der Anmeldung: **09.05.2018**
(21) Anmeldenummer: 16197298.9
(22) Anmeldetag: 04.11.2016
(51) Int. Cl.: A47J 31/40, A47J 31/41, G07F 13/06

(54) **GETRÄNKEAUTOMAT**

(71) Anmelder: ALDI SÜD Dienstleistungs-GmbH & Co. oHG, 45476 Mülheim/Ruhr (DE)
(72) Erfinder: ERNST, Peter, 45478 Mülheim an der Ruhr (DE); OCHSENSCHLÄGER, Robert, 45470 Mülheim an der Ruhr (DE)
(74) Vertreter: Nunnenkamp, Jörg

(57) **Zusammenfassung**

Gegenstand der vorliegenden Erfindung ist ein Getränkeautomat, insbesondere Heißgetränkeautomat, welcher mit zumindest einer Wasserzuleitung (1) und wenigstens einem Vorratsbehälter (3) zur Aufnahme einer Getränkezutat ausgerüstet ist. Ferner ist zumindest ein Vorratsbehälter (8) zur Aufnahme eines Getränkekonzentrates realisiert. Erfindungsgemäß ist das Getränkekonzentrat getränkezutatenfrei ausgebildet und wird mit einem in wenigstens einer Mischeinheit (2) zubereiteten getränkezutatenhaltigen Wasser erst in dem Getränkebehälter (7) gemischt.

## Beschreibung

Die Erfindung betrifft einen Getränkeautomaten insbesondere einen Heißgetränkeautomaten, mit zumindest einer Wasserzuleitung und wenigstens einem Vorratsbehälter zur Aufnahme einer Getränkezutat, ferner mit zumindest einem Vorratsbehälter zur Aufnahme eines Getränkekonzentrates.

Getränkeautomaten und insbesondere Selbstbedienungsautomaten bzw. Verkaufsautomaten werden in der Praxis in unterschiedlicher Ausprägung und an verschiedenen Orten eingesetzt. Mit ihrer Hilfe kann eine Vielzahl von verschiedenen Heiß- und Kaltgetränken aus unterschiedlichen Zutaten zubereitet und in einen Getränkebehälter abgegeben werden.

Beispiele für mit einem solchen Getränkeautomaten und insbesondere Heißgetränkeautomaten zubereitete und abgegebene Heißgetränke sind Kaffee, Tee, Kakao aber auch Softgetränke auf Basis von beispielsweise Vanille oder anderen Aromen. Daneben können mit solchen Getränkeautomaten auch Kaltgetränke wie Eistee, Limonaden sowie die zuvor angesprochenen Softgetränke in kalter Form abgegeben werden.

Um diese Getränke im Detail herzustellen, werden einerseits Getränkezutaten wie beispielsweise Milchpulver, Kakaopulver, Zucker, Schokoladenpulver etc. mit heißem oder kaltem Wasser gemischt und als Getränkezutat einem Heißgetränk wie beispielsweise Kaffee oder Tee zudosiert. Grundsätzlich kann die betreffende und in Wasser gelöste Getränkezutat aber auch zur Herstellung eines eigenständigen und verzehrfertigen Getränkes genutzt werden. Neben diesen Getränkezutaten kommen darüber hinaus auch Getränkekonzentrate zum Einsatz wie beispielsweise Sirupe oder Saftkonzentrate, Zuckersirup etc. Die verschiedenen Getränkezutaten und Getränkekonzentrate werden typischerweise in wenigstens einer Mischeinheit gemischt und dann über eine Ausgabeleitung an den zu füllenden Getränkebehälter abgegeben. Das hat sich grundsätzlich bewährt.

Aufgrund der verschiedenen Getränkezutaten und Getränkekonzentrate kommt es in der Ausgabeleitung oder in Zuleitungen oftmals dazu, dass Rückstände hierin verbleiben. Das ist aus hygienischen Gründen nicht akzeptabel. Aus diesem Grund schlägt der gattungsbildende Stand der Technik nach der DE 20 2014 102 435 U1 bereits einen Getränkeautomaten vor, welcher im Hinblick auf Reinigung und Hygiene verbessert sein soll.

Zu diesem Zweck sorgt eine Steuerung dafür, dass zur Zubereitung eines gewünschten Getränks zunächst heißes und/oder kaltes Trinkwasser der Mischeinheit zugeführt und danach in der Mischeinheit die Getränkezutaten bzw. Getränkekonzentrate in fließendes Trinkwasser injiziert werden. Außerdem wird nach dem Injizieren der Getränkezutaten bzw. Getränkekonzentrate die Zufuhr von Trinkwasser nicht sofort deaktiviert, um ein Spülen der Mischeinheit und der Ausgabeleitung mit Trinkwasser ohne Zusatz von Getränkezutaten bzw. Getränkekonzentrat zu ermöglichen.

Die bekannte Vorgehensweise hat sich zwar grundsätzlich bewährt, stößt allerdings bei besonders zuckerhaltigen Getränkekonzentraten an Grenzen. So werden heutzutage oftmals beispielsweise Vanillearomen nachgefragt, die unter anderem einem Kakaoheißgetränk oder einem Schokoheißgetränk oder auch Kaffee als Getränkekonzentrat beigemischt werden. Insbesondere bei solchen zuckerhaltigen Aromen, die als flüssige Getränkekonzentraten zubereitet und abgegeben werden, besteht die Gefahr, dass Zuleitungen respektive Ausgabeleitungen, die mit dem betreffenden Konzentrat beschickt werden, nach wie vor mit der Zeit aufgrund sich bildendem kristallinen Zucker verstopfen können.

Zumindest ergeben sich hieraus unverändert Hygieneprobleme. Hier setzt die Erfindung ein.

Der Erfindung liegt das technische Problem zugrunde, einen derartigen Getränkeautomaten so weiter zu entwickeln, dass insbesondere mit der Verarbeitung zuckerhaltiger Aromen verbundene Hygieneprobleme und eventuelle Leitungsverstopfungen zuverlässig vermieden werden.

Zur Lösung dieser technischen Problemstellung ist ein gattungsgemäßer Getränkeautomat im Rahmen der Erfindung dadurch gekennzeichnet, dass das Getränkekonzentrat getränkezutatenfrei ausgebildet ist und mit einem in wenigstens einer Mischeinheit zubereiteten getränkezutatenhaltigen Wasser erst in dem Getränkebehälter gemischt wird.

Die Getränkezutat ist im Allgemeinen pulverförmig oder körnig ausgebildet. Nach vorteilhafter Ausgestaltung handelt es sich bei der Getränkezutat um Zucker, beispielsweise kristallinen Zucker oder Pulverzucker. Demgegenüber ist das Getränkekonzentrat im Allgemeinen flüssig und ggf. aromatisiert als beispielsweise Getränkesirup ausgelegt.

Auf diese Weise arbeitet die Erfindung nach vorteilhafter Ausgestaltung derart, dass das Getränkekonzentrat bzw. der im Allgemeinen aromatisierte Getränkesirup getränkezutatenfrei, d. h. im vorliegenden Fall zuckerfrei ausgebildet ist und mit einem in wenigstens einer Mischeinheit zubereiteten getränkezutatenhaltigen Wasser, d. h. vorliegend einem zuckerhaltigen Wasser, erst in dem Getränkebehälter gemischt wird. In diesem Zusammenhang hat es sich zusätzlich als besonders günstig erwiesen, wenn das fragliche Getränkekonzentrat bzw. der aromatisierte Getränkesirup sauer ausgelegt ist. In diesem Fall verfügt der Getränkesirup bzw. das Getränkekonzentrat im Allgemeinen über einen ph-Wert unterhalb von 5. Insbesondere wird sogar ein ph-Wert von weniger als 4 beobachtet. Vorzugsweise verfügt das eingesetzte Getränkekonzentrat bzw. der Getränkesirup über einen ph-Wert von ca. 3,9. In jedem Fall ist das getränkezutatenfreie und insbesondere zuckerfreie Getränkekonzentrat sauer ausgelegt.

Auf diese Weise wird das getränkezutatenfreie bzw. zuckerfreie saure Getränkekonzentrat durch die Zuleitung vom Vorratsbehälter zur Aufnahme des Getränkekonzentrates bis hin zu einer Ausgabeleitung in den Getränkebehälter geführt. Die Zuleitung und Ausgabeleitung können dabei prinzipbedingt nicht durch kristallisierenden Zucker verstopft werden. Zugleich ist das geringfügig sauer eingestellte Getränkekonzentrat größtenteils mikrobiologisch unbedenklich, so dass sich in der betreffenden Zuleitung und auch in der Ausgabeleitung für das Getränkekonzentrat Bakterien oder andere schädliche Mikroben überwiegend nicht absetzen oder ansammeln können. Auch etwaige Zuckeransammlungen lassen sich ausschließen.

Denn der erforderliche Zuckerzusatz bzw. die Getränkezutat zu dem Getränkekonzentrat erfolgt erst innerhalb des Getränkebehälters. Dazu wird das entsprechende getränkezutatenhaltige bzw. zuckerhaltige Wasser in der Mischeinheit zubereitet und erst dann in den Getränkebehälter abgegeben.

Für die Zubereitung des getränkezutatenhaltigen Wassers wird im Allgemeinen so vorgegangen, dass die fragliche Getränkezutat bzw. der Zucker von einem Vorratsbehälter ausgehend der Mischeinheit zugeführt wird. In der Mischeinheit wird der Getränkezutat bzw. dem Zucker Wasser zugemischt, so dass auf diese Weise ein getränkezutatenhaltiges Wasser bzw. Zuckerwasser ausgangsseitig der Mischeinheit zur Verfügung steht und über eine dort vorgesehene Ausgabeleitung unmittelbar in den Getränkebehälter abgegeben wird. Erst im Getränkebehälter erfolgt dann die Mischung mit dem zuvor oder gleichzeitig abgegebenen getränkezutatenfreien bzw. zuckerfreien Getränkekonzentrat.

Beim Stand der Technik wird demgegenüber im Allgemeinen so vorgegangen, dass das Getränkekonzentrat lediglich noch mit Wasser gemischt wird, um dann als verzehrfertiges Getränk zur Verfügung zu stehen. Demgegenüber arbeitet die Erfindung dergestalt, dass das getränkezutatenfreie Getränkekonzentrat bzw. das zuckerfreie Getränkekonzentrat mit einem getränkezutatenhaltigen Wasser bzw. zuckerhaltigen Wasser erst im Getränkebehälter gemischt wird. Dadurch lassen sich insbesondere Zuckerablagerungen in der Zuleitung und auch Ausgabeleitung für das Getränkekonzentrat wirksam verhindern.

Solche Zuckerablagerungen können darüber hinaus in der Zuleitung und Ausgabeleitung für das getränkezutatenhaltige bzw. zuckerhaltige Wasser größtenteils vermieden werden, weil die an dieser Stelle geführte Zuckerlösung eine viel geringere Zuckerkonzentration als beispielsweise im Getränkesirup aufweist. Hierbei geht die Erfindung von der Erkenntnis aus, dass beispielsweise volumetrisch mindestens die 5-fache oder manchmal sogar die 10-fache Menge an Wasser im Vergleich zum Getränkekonzentrat zugegeben wird bzw. zugegeben werden muss, um das verzehrfertige Getränk zur Verfügung zu stellen. Folgerichtig beträgt auch die Konzentration des Zuckers im Wasser nur noch ein Fünftel bis ein Zehntel im Vergleich zur Konzentration im Getränkekonzentrat. Dadurch sind etwaige Festbackungen oder ein Auskristallisieren des Zuckers in der Zuleitung ebenso wie in der Ausgabeleitung für das getränkezutatenhaltige bzw. zuckerhaltige Wasser per se unwahrscheinlich.

Um die Hygiene noch weiter zu verbessern, wird in diesem Zusammenhang zusätzlich so vorgegangen, dass die Ausgabeleitung zur Zufuhr des getränkezutatenfreien bzw. zuckerfreien Getränkekonzentrates an den Getränkebehälter nach Abgabe des Getränkekonzentrates mit Wasser und insbesondere Heißwasser gespült wird. Ebenso mag auch die Ausgabeleitung ausgehend von der Mischeinheit für das getränkezutatenhaltige Wasser bzw. zuckerhaltige Wasser nach Abgabe des getränkezutatenhaltigen Wassers erneut mit Wasser und insbesondere Heißwasser gespült werden. Dadurch werden insgesamt besondere hygienische Vorteile beobachtet, die bisher im Stand der Technik nicht für möglich gehalten worden sind. Als Folge hiervon lassen sich auch etwaige Reinigungszyklen des erfindungsgemäßen Getränkeautomaten deutlich verlängern und ist zugleich der Geschmack der zubereiteten Getränke verbessert. Hierin sind die wesentlichen Vorteile zu sehen.

Im Allgemeinen sind mehrere Vorratsbehälter zur Aufnahme unterschiedlicher Getränkekonzentrate vorgesehen und an eine gemeinsame Zuleitung angeschlossen. Bei den Getränkekonzentraten handelt es sich beispielhaft und nicht einschränkend um Vanille-, Haselnuss-, Karamellkonzentrat etc. Dementsprechend verfügt der erfindungsgemäße Getränkeautomat im Beispielfall über zumindest drei Vorratsbehälter für die einzelnen verschiedenen und zuvor genannten Geschmacksrichtungen. Diese sämtlichen Vorratsbehälter zur Aufnahme der unterschiedlichen Getränkekonzentrate sind nun im Rahmen einer vorteilhaften Variante an die gemeinsame Zuleitung angeschlossen. Die Zuleitung ist dabei vorteilhaft zugleich als Ausgabeleitung einer weiteren Mischeinheit ausgebildet.

Das heißt, der erfindungsgemäße Getränkeautomat verfügt zunächst einmal über eine erste Mischeinheit, in welcher das getränkezutatenhaltige Wasser produziert wird. Dazu ist der Mischeinheit im konkreten Beispielfall ein mit Pulverzucker oder kristallinem Zucker gefüllter Vorratsbehälter zugeordnet und zugleich eine Wasserzuleitung. In der Mischeinheit wird nun die Getränkezutat bzw. der Zucker mit Wasser gemischt und verlässt die Mischeinheit über die Ausgabeleitung als getränkezutatenhaltiges bzw. zuckerhaltiges Wasser zur unmittelbaren Abgabe in den Getränkebehälter.

Neben dieser ersten obligatorischen Mischeinheit ist nun wenigstens noch eine weitere zweite Mischeinheit realisiert. Dieser zweiten Mischeinheit ist eine weitere Getränkezutat, beispielsweise Schokoladenpulver, zugeordnet und erneut eine Wasserzuleitung. Dadurch kann Schokoladenpulver im Beispielfall mit Wasser in der zweiten Mischeinheit gemischt werden. Zugleich fungiert die Ausgabeleitung als Zuleitung für die sämtlichen Vorratsbehälter zur Aufnahme der unterschiedlichen Getränkekonzentrate. Dadurch wird das betreffende Getränkekonzentrat in die Ausgabeleitung ausgangsseitig der zweiten Mischeinheit abgegeben. Hierdurch besteht die Möglichkeit, nach der Zufuhr des getränkezutatenfreien Getränkekonzentrates an den Getränkebecher über die Ausgabeleitung mit Wasser bzw. Heißwasser zu spülen. Denn dieses Wasser bzw. Heißwasser steht eingangsseitig der betreffenden weiteren bzw. zweiten Mischeinheit zur Verfügung, weil dort eingangsseitig die eigene Wasserzuleitung vorgesehen ist. Die Wasserzuleitung übernimmt in diesem Fall also eine zweifache Funktion, einerseits zum Mischen und zur Zubereitung des der zweiten Mischeinheit zugeordneten Vorratsbehälters zur Aufnahme der Getränkezutat wie beispielsweise Kakaopulver oder Schokoladenpulver und andererseits im Zuge der Reinigung der Ausgabeleitung für das getränkezutatenfreie Getränkekonzentrat an den Getränkebehälter.

Auch in diesem Fall sind regelmäßig mehrere Vorratsbehälter zur Aufnahme unterschiedlicher Getränkezutaten vorgesehen. Außerdem weist der erfindungsgemäße Getränkeautomat vorteilhaft mehrere Mischeinheiten ausgangsseitig zugehöriger Vorratsbehälter zur Aufnahme der Getränkezutaten auf. Dabei gehört jede Mischeinheit zu einem Vorratsbehälter. Maximal zwei Vorratsbehälter sind eingangsseitig der zugehörigen Mischeinheit vorgesehen. Außerdem ist jede Mischeinheit noch mit einer eigenen Wasserzuleitung ausgerüstet, die in die betreffende Mischeinheit mündet. Dadurch kann das über den Vorratsbehälter für die Getränkezutat zugeführte Pulver oder die Körnung der Getränkezutat problemlos mit Wasser gemischt und hierin gelöst werden.

Außerdem ist jede Mischeinheit vorteilhaft mit einer eigenen Ausgabeleitung ausgerüstet. Sämtliche Ausgabeleitungen münden dabei in eine gemeinsame Ausgabeeinheit. Unterhalb der Ausgabeeinheit ist der Getränkebehälter platziert.

Der einzelne Vorratsbehälter zur Aufnahme der Getränkezutat ist im Allgemeinen jeweils als Rieselbehälter ausgebildet. Der betreffende Rieselbehälter lässt sich mit der pulverförmigen oder körnigen Getränkezutat problemlos und bei Bedarf wiederbefüllen. Auf diese Weise kann die betreffende Getränkezutat schwerkraftunterstützt aus dem Vorratsbehälter über eine Rieselöffnung abgegeben werden und zwar vorteilhaft an die in Rieselrichtung darunter befindliche Mischeinheit.

Bei den einzelnen Vorratsbehältern zur Aufnahme des Getränkekonzentrates kann es sich um Faltkartons und vorzugsweise Einwegfaltkartons handeln. Im Allgemeinen kommen jedoch Behälter vom Typ "Bag-in-Box" zum Einsatz. Hierbei handelt es sich um beispielsweise in einem Karton aufgenommene Beutel. Aus dem betreffenden Beutel wird anschließend das Getränkekonzentrat im Allgemeinen herausgepumpt, so dass sich der Beutel unschwer innerhalb des Kartons bedingt durch den äußeren Luftdruck zusammenziehen kann. - Gegenstand der Erfindung ist auch ein Verfahren zum Betrieb eines solchen Getränkeautomaten, wie es in den Ansprüche 14 und 15 näher erläutert und beschrieben wird.

Im Ergebnis wird ein Getränkeautomat zur Verfügung gestellt, der mit im Vergleich zum bisherigen Stand der Technik verbesserter Hygiene überzeugt. Außerdem ist der Geschmack der jeweils abgegebenen Getränke und insbesondere Heißgetränke verbessert. Das lässt sich im Kern darauf zurückführen, dass etwaige Kristallisationen insbesondere an Zucker in Zuleitungen bzw. Ausgabeleitungen zuverlässig vermieden wird. Zugleich sorgt der spezielle Einsatz von getränkezutatenfreiem bzw. zuckerfreiem Getränkekonzentrat mit seinem sauren Charakter dafür, dass eventuelle mikrobiologische Belastungen vermieden werden. Hierin sind die wesentlichen Vorteile zu sehen.

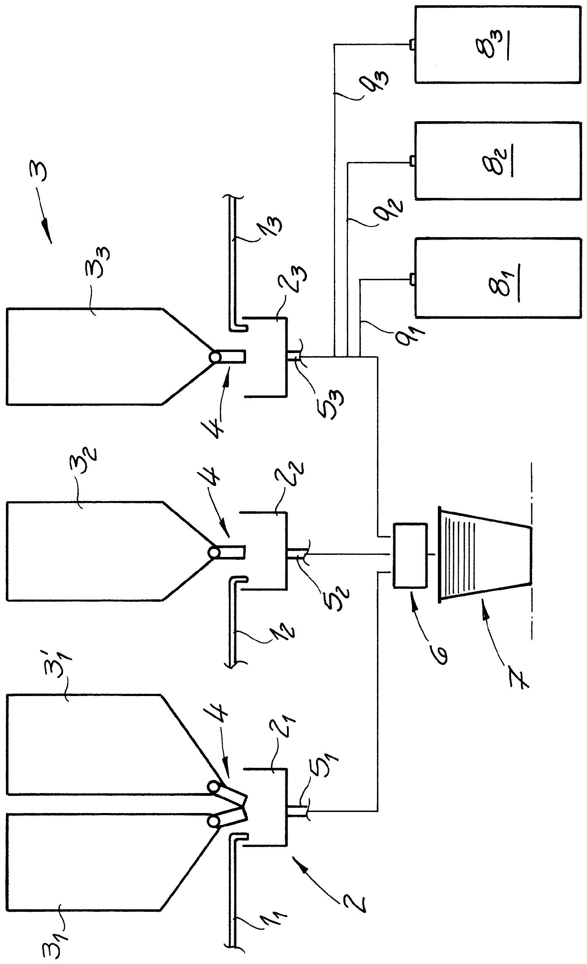

Im Folgenden wird die Erfindung anhand einer lediglich ein Ausführungsbeispiel darstellenden Zeichnung näher erläutert. Die einzige Figur zeigt den erfindungsgemäßen Getränkeautomaten schematisch und reduziert auf die für die Erfindung wesentlichen Bestandteile.

Bei dem dargestellten Getränkeautomaten handelt es sich vorteilhaft um einen Heißgetränkeautomaten. Selbstverständlich kann der Getränkeautomat auch als Kaltgetränkeautomat ausgelegt sein. Auch Mischformen in dem Sinne, dass sowohl Heißgetränke als auch Kaltgetränke wunschgemäß ausgegeben werden, sind denkbar. Der Getränkeautomat ist vorliegend als Selbstbedienungsautomat ausgebildet. Zu diesem Zweck verfügt der Getränkeautomat über mindestens eine Wasserzuleitung 1 für je nach gewünschtem Getränk heißes Wasser bzw. kaltes Wasser oder auch eine Mischung aus heißem und kaltem Wasser. Tatsächlich sind im Ausführungsbeispiel insgesamt drei Wasserzuleitungen 1 realisiert. Die jeweilige Wasserzuleitung 1 mündet dabei in eine zugehörige Mischeinheit 2. Tatsächlich erkennt man anhand der einzigen Figur, dass die Wasserzuleitung 1₁ in die erste Mischeinheit 2₁ mündet. Die zweite Wasserzuleitung 1₂ mündet demgegenüber in die zweite Mischeinheit 2₂. Für die dritte Wasserzuleitung 1₃ gilt, dass diese das hierüber zugeführte Wasser in die dritte Mischeinheit 2₃ abgibt.

Den einzelnen Mischeinheiten 2 bzw. 2₁, 2₂ und 2₃ sind Vorratsbehälter 3 zugeordnet, die in ihrem Inneren eine Getränkezutat aufnehmen. Die Getränkezutat stellt volumetrisch meistens nur einen Bruchteil des gewünschten Getränkes dar. Demgegenüber definieren Wasser und ein Getränkekonzentrat regelmäßig die Hauptbestandteile des fraglichen Getränkes. Bei der Getränkezutat handelt es sich im konkreten Beispielsfall um eine solche, die pulverförmig oder körnig vorliegt. Aus diesem Grund sind die einzelnen Vorratsbehälter 3 zur Aufnahme der pulverförmigen oder körnigen Getränkezutat auch jeweils als Rieselbehälter ausgebildet. Außerdem lassen sich die Vorratsbehälter 3 wiederbefüllen. Tatsächlich verfügt jeder Vorratsbehälter 3 ausgangsseitig über eine Rieselöffnung 4, über welche aus dem zugehörigen Vorratsbehälter bzw. Rieselbehälter 3 die pulverförmige oder körnige Getränkezutat schwerkraftunterstützt in die jeweils in Rieselrichtung darunter befindliche Mischeinheit 2 abgegeben wird.

Man erkennt anhand der Darstellung, dass der ersten Mischeinheit 2₁ zwei Vorratsbehälter 3₁ und 3'₁ zugeordnet sind. Der Vorratsbehälter 3₁ mag im Beispielfall zur Aufnahme von Milchpulver ausgelegt sein. Demgegenüber ist der der ersten Mischeinheit 2₁ zugeordnete zweite Vorratsbehälter 3'₁ mit kristallinem oder pulverförmigem Zucker gefüllt. Über den dritten Vorratsbehälter 3₂ wird demgegenüber Teepulver bzw. Milchteepulver der darunter befindlichen Mischeinheit 2₂ über die zugehörige Rieselöffnung 4 bedarfsweise zugeführt. Der dritte Vorratsbehälter 3₃ ist dagegen mit Schokoladenpulver im Beispielfall gefüllt, welches erneut schwerkraftunterstützt über die Rieselöffnung 4 an die darunter in Rieselrichtung befindliche dritte Mischeinheit 2₃ bei Bedarf abgegeben wird. Das heißt, die fragliche Getränkezutat wird über die Rieselöffnung 4 gesteuert und bedarfsweise an die in Rieselrichtung jeweils darunter befindliche Mischeinheit 2 abgegeben.

Zugleich wird bei diesem Vorgang Wasser und insbesondere heißes Wasser über die zu der Mischeinheit 2₁, 2₂ und 2₃ jeweils gehörige Wasserzuleitung 1₁, 1₂ und 1₃ der betreffenden Mischeinheit 2₁, 2₂ und 2₃ zugeführt, so dass dann die zuvor pulverförmige oder körnige Getränkezutat (das Milchpulver, der Zucker, das Teepulver und schließlich das Schokoladenpulver) in Wasser gelöst die betreffende Mischeinheit 2₁, 2₂, 2₃ über eine zugehörige und ausgangsseitig an die betreffende Mischeinheit 2₁, 2₂ und 2₃ angeschlossene jeweilige Ausgabeleitung 5₁, 5₂ und 5₃ verlässt. Die im Ausführungsbeispiel drei Ausgabeleitungen 5₁, 5₂ und 5₃ münden beim dargestellten Getränkeautomaten insgesamt in eine gemeinsame Ausgabeeinheit 6. Unterhalb der Ausgabeeinheit 6 ist ein zu befüllender Getränkebehälter 7 vorgesehen und lässt sich platzieren. Selbstverständlich können an dieser Stelle auch mehrere Getränkebehälter 7 bei Bedarf vorgesehen und platziert werden.

Der dargestellte und erfindungsgemäße Getränkeautomat weist nicht nur die bereits behandelten Vorratsbehälter bzw. Rieselbehälter 3₁, 3'₁, 3₂ und 3₃ für die jeweils unterschiedlichen und pulverförmigen oder körnigen Getränkezutaten (Milchpulver, Zucker, Teepulver und Schokoladenpulver im Beispielfall) auf. Sondern es sind zusätzlich noch nach dem gezeigten Beispiel drei weitere Vorratsbehälter 8₁, 8₂ und 8₃ realisiert, die jeweils mit dem flüssigen Getränkekonzentrat gefüllt sind, dass im Regelfall auch aromatisiert ist und folglich als aromatisierter Getränkesirup vorliegt. Dementsprechend handelt es sich bei den zugehörigen Vorratsbehältern 8₁, 8₂ und 8₃ zur Aufnahme der jeweiligen Getränkekonzentrate jeweils um eine sogenannte "Bag-in-Box", also einen in einer Box bzw. einem Karton aufgenommenen Beutel. Grundsätzlich können an dieser Stelle auch Faltkartons und insbesondere Einwegfaltkartons zum Einsatz kommen.

Während die Getränkezutaten schwerkraftunterstützt aus den betreffenden Vorratsbehältern bzw. Rieselbehältern 3 gesteuert derart abgegeben werden, dass die zugehörige Rieselöffnung 4 bedarfsweise mithilfe beispielsweise eines Stellmotors geöffnet und geschlossen wird, erfolgt die Abgabe und Zugabe der flüssigen Getränkekonzentrate bzw. des aromatisierten Getränkesirups dadurch, dass die Vorratsbehälter 8₁, 8₂ und 8₃ bzw. die Faltkartons mithilfe von nicht näher dargestellten jeweiligen Pumpen entleert werden. Dazu sind die sämtlichen Vorratsbehälter 8₁, 8₂ und 8₃ für die jeweils unterschiedlichen flüssigen Getränkekonzentrate an eine gemeinsame Zuleitung angeschlossen, bei welche es sich im Ausführungsbeispiel um die Ausgabeleitung 5₃ der zweiten bzw. dritten Mischeinheit 2₃ handelt.

Über diese Ausgabeleitung 5₃ werden die betreffenden flüssigen Getränkekonzentrate unmittelbar an den Getränkebehälter 7 bzw. einen Getränkebecher oder Trinkbecher abgegeben. Zugleich fungiert die Ausgabeleitung 5₃ als Ausgabe für in Wasser gelöstes Schokopulver bzw. Schokoladenpulver im Beispielfall, welches in dem dritten Vorratsbehälter 3₃ für die betreffende Getränkezutat bevorratet wird. Dazu verlässt das betreffende Schokopulver die Rieselöffnung 4 des zugehörigen Vorratsbehälters bzw. Rieselbehälters 3₃ in Richtung auf die Mischeinheit 2₃ und wird hier mit Wasser, insbesondere heißem Wasser gemischt, welches über die zu der Mischeinheit 2₃ korrespondierende Wasserzuleitung 1₃ zugeführt wird. Das fragliche flüssige Schokopulver kann dann anschließend noch mit Milch gemischt werden, welches als in Wasser gelöstes Milchpulver ausgehend von dem ersten Vorratsbehälter 3₁ über die erste Mischeinheit 2₁ mit dort über die Wasserzuleitung 1₁ zugeführtem Wasser gemischt und dann über die Ausgabeleitung 5₁ an den Getränkebehälter 7 abgegeben wird. Das gilt insgesamt natürlich nur beispielhaft.

Von besonderer erfinderischer Bedeutung ist nun der Umstand, dass die jeweiligen und in den Vorratsbehältern 8₁, 8₂ und 8₃ jeweils bevorrateten Getränkekonzentrate getränkezutatenfrei ausgebildet sind. Dadurch wird das fragliche getränkezutatentfreie Getränkekonzentrat erst in dem Getränkebehälter 7 mit die betreffende Getränkezutat enthaltenem Wasser gemischt. Dieses getränkezutatenhaltige Wasser wird im Ausführungsbeispiel in wenigstens einer Mischeinheit 2 zubereitet, konkret in der ersten Mischeinheit 2₁.

Im Detail handelt es sich bei den einzelnen Getränkekonzentraten um aromatisierte Getränkesirupe der Geschmacksrichtungen Vanille, Haselnuss und Karamell. Das gilt selbstverständlich nur beispielhaft und nicht einschränkend. Jedes einzelne Getränkekonzentrat ist dabei in einem zugehörigen Vorratsbehälter 8₁, 8₂ und 8₃ bevorratet und wird aus diesem in die Ausgabeleitung 5₃ bedarfsweise gepumpt bzw. abgegeben. Ausgehend von der Ausgabeleitung 5₃ gelangt folglich das betreffende flüssige Getränkekonzentrat bzw. der aromatisierte Getränkesirup unmittelbar in den Getränkebehälter 7.

Da das Getränkekonzentrat bzw. der Getränkesirup getränkezutatenfrei ausgebildet ist, im vorliegenden Fall zuckerfrei, verfügt das jeweilige zuckerfreie Getränkekonzentrat typischerweise über einen sauren Charakter, weil sein ph-Wert durch den fehlenden Zucker im Bereich von ca. 3,9 angesiedelt ist. Dadurch lassen sich zuverlässig etwaige mikrobiologische Ablagerungen nicht nur in der Ausgabeleitung 5₃, sondern auch in den einzelnen in die Ausgabeleitung 5₃ mündenden Abgabeleitungen 9₁, 9₂ und 9₃ verhindern.

Tatsächlich sorgt die jeweilige Abgabeleitung 9₁ dafür, dass das im Vorratsbehälter 8₁ aufgenommene Getränkekonzentrat, vorliegend zuckerfreier Vanillesirup, über die Ausgabeleitung 5₃ bedarfsweise in den Getränkebehälter 7 abgegeben wird. Dazu mag die an dieser Stelle erforderliche Pumpe von einer nicht dargestellten Steuereinheit beaufschlagt werden. Die Abgabeleitung 9₂ sorgt demgegenüber für die Zufuhr von zuckerfreiem Haselnusssirup zum Getränkebehälter 7, welcher im Vorratsbehälter 8₂ aufgenommen wird. Der dritte Vorratsbehälter 8₃ ist schließlich im Beispielfall mit Karamellsirup, ebenfalls in zuckerfreier Form, gefüllt, welcher über die Abgabeleitung 9₃ in die Ausgabeleitung 5₃ abgeben wird und von hier aus in den Getränkebehälter 7 gelangt. In sämtlichen Abgabeleitungen 9₁, 9₂, 9₃ sind jeweils separate Pumpen vorgesehen, welche für die gesteuerte Abgabe des betreffenden zuckerfreien Getränkekonzentrates im Beispielfall sorgen, und zwar gesteuert von einer gemeinsamen und nicht dargestellten Steuereinheit.

Man erkennt, dass jede Mischeinheit 2₁, 2₂ und 2₃ zu einem Vorratsbehälter 3₁, 3'₁, 3₂ und 3₃ gehört. Dabei sind maximal zwei Vorratsbehälter 3 eingangsseitig der zugehörigen Mischeinheit 2 vorgesehen. Beispielsweise sind bei der ersten Mischeinheit 2₁ zwei Vorratsbehälter 3₁ und 3'₁ realisiert, während zu den übrigen Mischeinheiten 2₂ und 2₃ jeweils ein korrespondierender Vorratsbehälter 3₂ bzw. 3₃ gehört. Jede Mischeinheit 2₁, 2₂ und 2₃ ist mit einer eigenen Wasserzuleitung 1₁, 1₂ und 1₃ ausgerüstet, die in die betreffende Mischeinheit 2₁, 2₂ und 2₃ mündet.

Beim Betrieb des fraglichen Getränkeautomaten wird eine Getränkezutat mit Wasser gemischt, vorliegend Zucker mit Wasser. Das geschieht in der ersten Mischeinheit 2₁. Dazu wird die Rieselöffnung 4 des Vorratsbehälters 3'₁ für Zucker gesteuert geöffnet, so dass der Zucker in die in Rieselrichtung darunter befindliche erste Mischeinheit 2₁ abgegeben wird. Hier wird der pulverförmige oder kristalline Zucker mit Wasser gemischt, welches über die der ersten Mischeinheit 2₁ zugeordnete Wasserzuleitung 1₁ zugeführt wird. In der Regel handelt es sich hierbei um heißes Wasser.

Dieses heiße Zuckerwassergemisch wird anschließend über die ausgangsseitig an die Mischeinheit 2₁ angeschlossene Ausgabeleitung 5₁ über die Ausgabeeinheit 6 schließlich in den Getränkebehälter 7 abgegeben. Gleichzeitig, vorher oder nachher ist der fragliche Getränkebehälter 7 mit dem getränkezutatenfreien Getränkekonzentrat befüllt worden. Konkret mag hierzu Vanillesirup aus dem Vorratsbehälter 8₁ über die Abgabeleitung 9₁ und die Ausgabeleitung 5₃ in den Getränkebehälter 7 abgegeben werden. Da der Vanillesirup zuckerfrei ausgelegt ist, folgt die Zugabe von Zucker erst in dem Getränkebehälter 7, und zwar in Gestalt des über die Ausgabeleitung 5₁ abgegebenen zuckerhaltigen (heißen) Wassers. Zusätzlich mag dem Getränk dann beispielsweise noch in Wasser gelöstes Milchpulver gleichzeitig oder danach aus dem Vorratsbehälter 3₁ zugeführt werden.

Nach Abgabe des getränkezutatenfreien bzw. zuckerfreien Getränkekonzentrates bzw. des Vanillesirups im Beispielfall an den Getränkebehälter 7 wird die Ausgabeleitung 5₃ im Ausführungsbeispiel mit Wasser und insbesondere Heißwasser gespült. Dazu wird eine dosierte Menge an heißem Wasser über die Wasserzuleitung 1₃ der dritten Mischeinheit 2₃ zugeführt und sorgt dann ausgangsseitig für die Spülung der an die dritte Mischeinheit 2₃ angeschlossenen Ausgabeleitung 5₃. Darüber hinaus kann zum Ende des Füllvorganges des Getränkebehälters 7 auch die weitere Ausgabeleitung 5₁ gespült werden, um hierin befindliche etwaige Zuckerreste zu lösen und an den Getränkebehälter 7 abzugeben. In diesem Fall wird eine bestimmte Menge an insbesondere heißem Wasser über die Wasserzuleitung 1₁ und die erste Mischeinheit 2₁ schließlich zur Spülung der Ausgabeleitung 5₁ genutzt.

## Patentansprüche

1. Getränkeautomat, insbesondere Heißgetränkeautomat, mit zumindest einer Wasserzuleitung (1) und wenigstens einem Vorratsbehälter (3) zur Aufnahme einer Getränkezutat, ferner mit zumindest einem Vorratsbehälter (8) zur Aufnahme eines Getränkekonzentrates, **dadurch gekennzeichnet, dass** das Getränkekonzentrat getränkezutatenfrei ausgebildet ist und mit einem in wenigstens einer Mischeinheit (2) zubereiteten getränkezutatenhaltigen Wasser erst in einem Getränkebehälter (7) gemischt wird.

2. Getränkeautomat nach Anspruch 1, **dadurch gekennzeichnet, dass** die Getränkezutat pulverfömig oder körnig ausgebildet ist.

3. Getränkeautomat nach Anspruch 1 oder 2, **dadurch gekennzeichnet, dass** die Getränkezutat als kristalliner Zucker oder Pulverzucker ausgebildet ist.

4. Getränkeautomat nach einem der Ansprüche 1 bis 3, **dadurch gekennzeichnet, dass** das Getränkekonzentrat flüssig und ggf. aromatisiert als beispielsweise Getränkesirup ausgelegt ist.

5. Getränkeautomat nach einem der Ansprüche 1 bis 4, **dadurch gekennzeichnet, dass** das Getränkekonzentrat sauer mit einem ph-Wert unterhalb von 5, insbesondere einem ph-Wert von weniger als 4, ausgebildet ist.

6. Getränkeautomat nach einem der Ansprüche 1 bis 5, **dadurch gekennzeichnet, dass** mehrere Vorratsbehälter (8₁, 8₂, 8₃) zur Aufnahme unterschiedlicher Getränkekonzentrate an eine gemeinsame Zuleitung (5₃) angeschlossen sind.

7. Getränkeautomat nach Anspruch 6, **dadurch gekennzeichnet, dass** die Zuleitung (5₃) zugleich als Ausgabeleitung (5₃) einer weiteren Mischeinheit (2) ausgebildet ist.

8. Getränkeautomat nach einem der Ansprüche 1 bis 7, **dadurch gekennzeichnet, dass** mehrere Vorratsbehälter (3₁, 3'₁, 3₂ und 3₃) zur Aufnahme unterschiedlicher Getränkezutaten vorgesehen sind.

9. Getränkeautomat nach einem der Ansprüche 1 bis 8, **dadurch gekennzeichnet, dass** mehrere Mischeinheiten (2₁, 2₂ und 2₃) ausgangsseitig zugehöriger Vorratsbehälter (3₁, 3'₁, 3₂ und 3₃) zur Aufnahme der Getränkezutaten vorgesehen sind, wobei jede Mischeinheit (2₁. 2₂ und 2₃) zu einem Vorratsbehälter (3₁, 3'₁, 3₂, 3₃) gehört und maximal zwei Vorratsbehälter (3₁, 3'₁,) eingangsseitig der zugehörigen Mischeinheit (2₁) vorgesehen sind.

10. Getränkeautomat nach Anspruch 9, **dadurch gekennzeichnet, dass** in jede Mischeinheit (2₁, 2₂, 2₃) eine eigene Wasserzuleitung (1₁, 1₂, 1₃) mündet.

11. Getränkeautomat nach Anspruch 9 oder 10, **dadurch gekennzeichnet, dass** jede Mischeinheit (2₁, 2₂, 2₃) mit einer eigenen Ausgabeleitung (5₁, 5₂, 5₃) ausgerüstet ist, wobei sämtliche Ausgabeleitungen (5₁, 5₂, 5₃) in eine gemeinsame Ausgabeeinheit (6) münden.

12. Getränkeautomat nach einem der Ansprüche 1 bis 11, **dadurch gekennzeichnet, dass** die Vorratsbehälter (3) zur Aufnahme der Getränkezutat als jeweils vorzugsweise wiederbefüllbare Rieselbehälter (3) ausgebildet sind, welche die Getränkezutat schwerkraftunterstützt über eine Rieselöffnung (4) abgeben.

13. Getränkeautomat nach einem der Ansprüche 1 bis 12, **dadurch gekennzeichnet, dass** die Vorratsbehälter (8) zur Aufnahme des Getränkekonzentrates als Bag-in-Box (Beutel-in-Schachtel) jeweils ausgebildet sind, aus denen das Getränkekonzentrat herausgepumpt wird.

14. Verfahren zum Betrieb eines Getränkeautomaten, insbesondere eines Getränkeautomaten nach einem der Ansprüche 1 bis 13, wonach wenigstens eine Getränkezutat mit Wasser gemischt wird, und wonach ein getränkezutatenfreies Getränkekonzentrat mit dem getränkezutatenhaltigen Wasser erst in einem Getränkebehälter (7) gemischt wird.

15. Verfahren nach Anspruch 14, **dadurch gekennzeichnet, dass** eine Ausgabeleitung (5₃) zur Zufuhr des getränkezutatenfreien Getränkekonzentrates an den Getränkebehälter (7) nach Abgabe des Getränkekonzentrates mit Wasser, insbesondere Heißwasser, gespült wird.
